# EUROPÄISCHE PATENTSCHRIFT

(11) **EP 3 121 527 B1**
(45) Veröffentlichungstag und Bekanntmachung des Hinweises auf die Patenterteilung: **18.03.2020**
(21) Anmeldenummer: 16180542.9
(22) Anmeldetag: 21.07.2016
(51) Int. Cl.: F24F 13/30, F24F 12/00, F24F 13/062, F24F 13/08, F28D 21/00, F28D 17/02, F28D 20/02, F24F 13/28

(54) **LÜFTUNGSVORRICHTUNG ZUR LÜFTUNG VON GEBÄUDERÄUMEN**
VENTILATING DEVICE FOR VENTILATION OF ROOMS
DISPOSITIF D'AERATION POUR DES PIECES DE BATIMENT

(30) Priorität: 21.07.2015 DE 102015111828; 29.06.2016 DE 202016103459 U
(43) Veröffentlichungstag der Anmeldung: 25.01.2017
(73) Patentinhaber: Aereco GmbH, 65719 Hofheim-Wallau (DE)
(72) Erfinder: NOBIS, Volkhard, 40549 Düsseldorf (DE)
(74) Vertreter: Blumbach · Zinngrebe Patentanwälte PartG mbB

(56) Entgegenhaltungen:
- EP-A2- 2 325 573
- DE-A1- 4 104 423
- DE-A1-102012 204 865
- DE-U1-202011 102 188
- SE-C1- 107 412
- US-A1- 2011 275 306

## Beschreibung

Die Erfindung betrifft allgemein raumlufttechnische Vorrichtungen, wie Klimageräte und Ventilatoren. Insbesondere betrifft die Erfindung eine Lüftungsvorrichtung für Gebäude zum Einbau in Gebäudewände.

Bei heutigen energieeffizienten Wohnhäusern, wie etwa von Passivhäusern kommt der Belüftung eine besonders wichtige Rolle zu. Da ein ausreichender Luftaustausch bei geschlossenen Fenstern hier nicht möglich ist und eine Fensterlüftung andererseits die Energieeffizienz erheblich herabsetzen würde, wird bei solchen Häusern eine Zwangslüftung mit Gebläsen und Wärmerückgewinnung eingesetzt.

Die Wärmerückgewinnung erfolgt in vielen Fällen mit Wärmetauschern, insbesondere auch Gegenstromwärmetauschern. Solche Anlagen sind unter anderem aus der DE 20 2014 003 368 U1, der EP 2 378 216 A2, der DE 10 2007 041 041 A1, der EP 1 131 583 B1 und der WO 2015/055435 A1 bekannt.

Ein weiteres System basiert darauf, dass ein Wärmespeicher rotiert wird, so dass die Abschnitte des Wärmespeichers abwechselnd den Zuluft- und den Abluftstrom durchqueren. Solche Lüftungen mit Wärmerückgewinnung werden unter anderem in der US 6,328,095 B1 und der WO 2008/058211 A2 beschrieben. Schließlich besteht auch noch die Möglichkeit, in einer Lüftungseinrichtung die Strömungsrichtung umzukehren, um die Wärme eines im Luftstrom angeordneten Wärmespeichers zurückzugewinnen. Derartige Systeme werden in der WO 2004/072559 A1 und der WO 01/25695 A1 beschrieben.

Die europäische Patentanmeldung EP 2 325 573 A2 beschreibt eine Gebäude-Be- und Entlüftungsvorrichtung mit einem in eine Mauer eines Gebäudes einsetzbarnen Montagerohr, einem lösbar in diesem Rohr angeordneten rohrförmigen Gehäuse, mindestens einem in diesem Gehäuse angeordneten Lüfter, einem im Gehäuse angeordneten Wärmespeicherelement und einen Blendrahmen.

Die deutsche Offenlegungsschrift DE 41 04 423 A1 beschreibt eine Entlüftungs- und Belüftungsanlage mit einem Wärmespeicher. Die Anlage verfügt über ein verschließbares Innenluftgitter mit einem Verriegelungsschalter.

Die deutsche Offenlegungsschrift DE 10 2012 204 865 A1 offenbart eine Belüftungsvorrichtung gemäß dem Oberbegriff des Anspruchs 1.

Schwierigkeiten bestehen bei bekannten Systemen hinsichtlich der folgenden Gesichtspunkte:
- Durch den Temperaturunterschied, welcher an den beiden Seiten einer Gebäudewand, in welcher eine Lüftungsvorrichtung angeordnet ist, herrschen kann, kommt es zum Auftreten von Kondensaten, insbesondere von Flüssigkeit, welche sich innerhalb der Lüftungsvorrichtung ansammelt. Diese Kondensflüssigkeit kann zum einen innerhalb der Belüftungsvorrichtung angeordnete elektrische oder elektronische Bauteile beschädigen. Oft werden solche Kondensate, beispielsweise Wasser, in Behältern gesammelt, welche geleert werden müssen, wenn ein bestimmter Füllstand überschritten wurde. In jeden Fall ist das Auftreten von Kondensaten mit einem erhöhten Aufwand verbunden.
- In der Regel sind Lüftungsvorrichtungen, welche an Gebäudewänden angeordnet sind, so ausgebildet, dass stets eine Verbindung zwischen Innen- und Außenseite einer Gebäudewand gegeben ist. Dies kann insbesondere dann, wenn es sich bei der betreffenden Wand um eine Außenwand handelt, unerwünscht sein, insbesondere wenn große Temperaturunterschiede zwischen Innen- und Außenseite herrschen.
- Ein besonderes Problem bei Lüftungen stellt außerdem die Geräuschentwicklung dar. Gerade in Wohnräumen sollte eine Lüftung möglichst geräuschlos arbeiten.

Der Erfindung liegt nun die Aufgabe zugrunde, eine raumlufttechnische Lüftung bereitzustellen, welche eine effiziente Wärmerückgewinnung mit einer geringen bis nicht mehr wahrnehmbaren Geräuschabgabe und einer einfachen Handhabung kombiniert. Diese Aufgabe wird durch den Gegenstand des unabhängigen Anspruchs gelöst. Vorteilhafte Ausgestaltungen der Erfindung sind in den abhängigen Ansprüchen angegeben.

Sowohl für die Effizienz, als auch für die Geräuschentwicklung ist es günstig, wenn bei gegebenem Durchmesser der Wandöffnung der luftführende Kanal der Lüftungseinrichtung einen möglichst großen Durchmesser aufweist und das Strömungsprofil möglichst verwirbelungsfrei ist. Eine Grundlage der Erfindung ist die konsequente Minimierung der Druckverluste durch Optimierung der Strömungsführung.

Die Erfindung sieht eine Lüftungsvorrichtung zur Lüftung von Räumen in Gebäuden, hier speziell zum Einbau in eine Öffnung in einer Gebäudewand vor, die insbesondere einer Außenwand sein kann. Die Lüftungsvorrichtung weist eine innenseitige Düse, sowie einen Ventilator und einen Lüftermotor zum Antrieb des Ventilators auf, um Luft durch die Öffnung hindurch zu transportieren. Die innenseitige Düse weist einen außen umlaufenden Kragen zur Anlage an die Gebäudewand auf, so dass der Rand der Öffnung in der Gebäudewand durch den Kragen der innenseitige Düse abgedeckt wird.

Zur Wärmerückgewinnung ist ein Regenerator in Form eines Wärmezwischenspeichers vorgesehen. Dieser ist vorzugsweise im Bereich der Wandöffnung, beziehungsweise innerhalb der Wand angeordnet und wird vom Luftstrom, der vom Ventilator erzeugt wird, durchflossen. Der Regenerator weist typischerweise eine große Oberfläche auf, um die Wärme schnell aufnehmen und abgeben zu können. Beispielsweise kann der Regenerator eine Vielzahl dünner Kanäle aufweisen, die von der Luft durchströmt werden. Ein anderes Beispiel ist ein Fasermaterial, etwa mit Metallfasern, die als Gewebe, Geflecht oder Vlies vorliegen.

Die innenseitige Düse weist eine Strömungsoberfläche auf, welche sich von der Innenseite der Düsenöffnung bis über den Kragen erstreckt und von einer in axialer Richtung auswärts gerichteten Neigung an der Innenseite in eine rückwärts gerichtete Neigung am Kragen übergeht. Weiterhin ist eine Blende vorgesehen, welche in einem Abstand zur Strömungsoberfläche der innenseitige Düse angeordnet ist und die Düsenöffnung abdeckt, so dass zwischen der Strömungsoberfläche und der Blende ein Spalt vorhanden ist, durch welchen die vom Ventilator geförderte Luft seitlich, insbesondere ringsum radial ein- oder austreten kann. Die Umkehrung der Neigung der Strömungsoberfläche wird dadurch erreicht, dass die Strömungsoberfläche die Gestalt eines ringförmigen Wulstes hat. Vorzugsweise ist der Spalt umlaufend, beziehungsweise ringförmig, wobei die Spaltöffnung gegebenenfalls durch Befestigungsmittel unterbrochen sein kann. Die Luft kann auf diese Weise radial wandparallel aus- und einströmen und die Wand stellt eine strömungstechnisch relevante Fortsetzung der strömungsführenden Oberfläche der Düse dar.

Mit der besonderen Form der Strömungsoberfläche wird also die direkt an der Strömungsoberfläche entlangströmende Luft um mehr als 90° umgelenkt. Im Speziellen strömt die Luft in der Öffnung zunächst noch in axialer Richtung und wird dann radial auswärts so weit umgelenkt, dass auch eine zurück zur Wand gerichtete Bewegungskomponente vorhanden ist. Eine derartige große Umlenkung erscheint auf den ersten Blick vielleicht nachteilig, da starke Umlenkungen in Strömungen die Neigung zu Turbulenzen erhöhen. In der erfindungsgemäß vorgeschlagenen Konfiguration in Verbindung mit der die Lüfteröffung abdeckenden Blende ergibt sich aber eine hohe Effizienz und auch eine sehr gute Unterdrückung von Betriebsgeräuschen. Durch die Neigung der Strömungsoberfläche zur Wand hin erweitert sich entlang der radialen Richtung die Breite des Spaltes. Entsprechend verringert sich die Strömungsgeschwindigkeit in radialer Richtung im Austrittsbereich stark. Damit werden Turbulenzen vermieden. Dabei wirkt auch die Blende schalldämmend, indem aus der Lüftungsöffnung austretender Schall zurückreflektiert wird.

Um die Effizienz weiter zu verbessern, ist es besonders vorteilhaft, auch eine außenseitige Düse vorzusehen, welche wie die innenseitige Düse einen außen umlaufenden Kragen zur Anlage an die Gebäudewand aufweist, so dass der Rand der Öffnung durch den Kragen der außenseitigen Düse abgedeckt wird. Vorzugsweise sind die innenseitige Düse und die außenseitige Düse getrennte und miteinander verbindbare Elemente der Lüftungsvorrichtung. Dies gestattet unter anderem eine einfache Anpassung an verschiedene Wanddicken.

Eine weitere Zielsetzung ist, bei gegebenem Durchmesser der Öffnung in der Gebäudewand einen möglichst großen Innendurchmesser des Rohrlüfters bereitzustellen. Dies kann unter anderem dadurch erreicht werden, indem möglichst platzsparende Befestigungsmittel für den Rohrlüfter verwendet werden. Gemäß einer Ausführungsform der Erfindung ist dazu vorgesehen, dass die innenseitige und die außenseitige Düse gegeneinander verspannt und auf diese Weise mit deren Kragen gegen die Wandoberflächen gepresst und so verankert werden.

Es ist auf diese Weise nicht notwendig, weitere Verbindungsmittel, wie etwa Dübel in der Wand anzubringen. Diese Form der Befestigung ist auch unabhängig von der Form der Düsen, also auch unabhängig davon, ob die Strömungsoberfläche der Düse den oben beschriebenen Wulst aufweist.

Gemäß einer weiteren Ausführungsform der Erfindung ist die Lüftungsvorrichtung dadurch gekennzeichnet, dass sie als Kabelbinder ausgestaltete Verbinder umfasst. Diese reichen durch die Öffnung in der Gebäudewand und verbinden die innenseitigen Bauteile der Lüftungsvorrichtung mit den außenseitigen Bauteilen so, dass diese in der Öffnung der Gebäudewand gegeneinander fixiert sind.

Als innenseitige Bauteile werden hierbei Bauteile bezeichnet, welche an der Innenseite der Gebäudewand angeordnet sind, also beispielsweise die innenseitige Düse oder die Blende. Außenseitige Bauteile sind entsprechend an der Außenseite der Gebäudewand angeordnet und können beispielsweise ebenfalls eine Blende umfassen, welche die Durchtrittsöffnung in der Außenwand abdeckt, sowie ebenfalls eine Düse. Die Durchtrittsöffnung ist hierbei der an der jeweiligen Wand sichtbare Eingang der Öffnung in der Gebäudewand.

Mit solchen aus Kabelbindern ausgestalteten Verbindern zwischen innenseitigen und außenseitigen Bauteilen der Lüftungsvorrichtung ist eine flexiblere und vereinfachte Montage der Lüftungsvorrichtung im Vergleich zu Lüftungsvorrichtungen des Standes der Technik möglich. So entfällt nicht nur aufwändiges Bohren und Fixieren der Lüftungsvorrichtung in der Gebäudewand, sondern es kann auch sehr flexibel auf unterschiedliche Dicken von Gebäudewänden reagiert werden. Auch Schwankungen, welche in einer Gebäudewand auftreten, sodass beispielsweise eine Gebäudewand an einer Seite der Durchtrittsöffnung eine größere Dicke aufweist als an einer anderen, können auf diese Weise leicht ausgeglichen werden.

Gemäß einer nochmals weiteren Ausführungsform der Erfindung sind die innenseitige und die außenseitige Öffnung des Verbindungsstücks in unterschiedlicher Höhe in der Durchtrittsöffnung der Gebäudewand anordnet. Das Verbindungsstück weist ein Gefälle auf, sodass kondensierte Flüssigkeit von der höhergelegenen Öffnung zur niedriger gelegenen Öffnung des Verbindungsstücks hin ableitbar ist.

Bevorzugt wird eine solche Neigung der Lüftungsvorrichtung durch Zentrierfedern erzeugt. Diese Zentrierfedern sind so eingestellt, dass auch bei einer waagrecht verlaufenden Öffnung in der Gebäudewand eine automatische Neigung des Verbindungsstücks erzielt wird.

Vorteilhaft ist gemäß einer Weiterbildung in diesem Fall an der Außenseite ein Speier bzw. Ablauf angeordnet, welcher eine Länge zwischen mindestens 2 cm und höchstens 10 cm, gemessen von der Gebäudewand in der Richtung weg von der Gebäudewand aufweist. So wird ein Benetzen der Außenwand durch eventuell gebildetes Kondensat vermindert bzw. ganz verhindert. Bevorzugt weist der Speier eine Länge von 3 cm auf.

Gemäß einem weiteren Aspekt der Erfindung ist daher allgemein eine raumlufttechnische Lüftungsvorrichtung zur Lüftung von Räumen in Gebäuden zum Einbau in eine Öffnung in einer Gebäudewand vorgesehen wobei die Lüftungsvorrichtung eine innenseitige Düse und eine außenseitige Düse, sowie einen Ventilator mit Lüftermotor umfasst, um Luft durch die Öffnung hindurch zu transportieren, wobei eine Verbindungseinrichtung vorgesehen ist, mit welcher die innenseitige und die außenseitige Düse miteinander verbunden und in axialer Richtung der Öffnung gegeneinander verspannbar sind, so dass die Kragen beim Verspannen aufeinander zu bewegt werden und sich an die Ränder der Öffnung anpressen und so die Lüftungsvorrichtung in der Öffnung verankern.

Gemäß noch einer Weiterbildung der Erfindung bildet der Ventilator mit Lüftermotor eine Einheit mit einer der Düsen. Damit kann die gesamte Technik in einer oder beiden Düsen integriert werden. Damit steht der Zwischenraum zwischen den beiden Düsen in der Wand voll als Strömungsquerschnitt zur Verfügung.

Der Strömungsquerschnitt wird besonders vorteilhaft auch dadurch optimiert, indem elektrische oder elektronische Komponenten zum Betrieb und zur Steuerung der Lüftungsvorrichtung in einem oder beiden Kragen der Düsen angeordnet sind. Besonders vorteilhaft wird hierbei auch durch den Wulst ausnutzbarer Bauraum geschaffen.

Um aus der Düsenöffnung austretenden Schall weiter zu dämpfen, ist gemäß einer Weiterbildung der Erfindung auch vorgesehen, dass die Blende auf der Seite, welche der Düsenöffnung zugewandt ist, eine profilierte Oberfläche aufweist. Durch Mehrfachreflexion des Schalls an den Strukturen der Profilierung kann sich der Schall totlaufen. Insbesondere ist eine profilierte Oberfläche mit radial auswärts verlaufenden, offenen Kanälen geeignet. Diese Kanäle bieten wenig Strömungswiderstand, da auch die Luftströmung an der Blende entlang radial auswärts und damit entlang der Längsrichtung der Kanäle erfolgt.

Gemäß einer weiteren Ausführungsform kann die Oberfläche der Blende auf der Seite, welche der Düsenöffnung zugewandt ist, als spitz zulaufende Form ausgebildet sein, wobei die Spitze über der geometrischen Mitte der Blendenfläche angeordnet ist, insbesondere in Form eines Kegels oder einer Pyramide, bevorzugt in Form eines Kegels oder einer Pyramide mit einer gekrümmt ausgebildeten Leitkurve, besonders bevorzugt in Form einer hyperbelartig gekrümmten Leitkurve.

Als Leitkurve des Kegels oder der Pyramide wird im Rahmen der vorliegenden Erfindung die Umhüllende des Kegelmantels bei einem Schnitt durch den Kegel, welcher senkrecht zur Grundfläche des Kegels angeordnet ist. Diese Umhüllende kann als Gerade, also mit sich von der Grundfläche bis zur Spitze nicht verändernden Steigung ausgebildet sein, oder als eine Kurve, bei welcher die Steigung variiert, insbesondere in Form einer Leitkurve, deren Steigung stetig variiert.

Insbesondere bevorzugt ist die Leitkurve so ausgebildet, dass deren Steigung in hin zur Spitze einen absolut höheren Wert aufweist als an der Blendenfläche.

Zur weiteren Verminderung des austretenden Schalls ist gemäß einer weiteren Ausführungsform der Erfindung vorgesehen, dass mindestens eine Blende mindestens einer Düsenöffnung ein Dämm-Material umfasst, bevorzugt EPP (Expandiertes Polypropylen) mit einer Dichte von 60g/l.

Ganz besonders bevorzugt umfasst sowohl die Blende auf der Innenseite als auch auf der Außenseite ein solches Dämm-Material.

Für die Wärmerückgewinnung wird mittels einer geeigneten Steuerung der Lüftungsvorrichtung die Strömungsrichtung der geförderten Luft in zeitlichen Abständen umgekehrt. Auf diese Weise wird der Regenerator erst durch beispielsweise wärmere Luft der Innenräume aufgewärmt, indem der Ventilator Luft aus dem Gebäude nach außen fördert. Dann wird die Strömungsrichtung umgekehrt, so dass der erwärmte Regenerator nun die von außen einströmende Luft auf nahezu Zimmertemperatur rückerwärmt. Generell, ohne Beschränkung auf spezielle Ausführungsformen der Erfindung ist es daher günstig, wenn ein Ventilator mit umkehrbarer Förderrichtung vorgesehen wird. Dies kann bei einem Axiallüfter durch Umschalten der Laufrichtung oder auch durch eine Blattverstellung bewirkt werden.

Zur Vermeidung von Luftaustausch zwischen Innenseite und Außenseite der Lüftungsvorrichtung bei zu großen Temperaturunterschieden ist in einer Weiterbildung der Erfindung die innenseitige Blende so ausgestaltet, dass mindestens zwei Stellungen dieser Blende, nämlich eine erste Stellung, bei welcher Luft durch die Durchtrittsöffnung sowie die innenseitige Düse leitbar ist, und eine zweite Stellung, bei welcher die Durchtrittsöffnung geschlossen ist.

Dafür ist die Lüftungsvorrichtung gemäß einer Weiterbildung der Erfindung so ausgestaltet, dass sie eine Haltevorrichtung umfasst, mit welcher die innenseitigen Bauteile der Lüftungsvorrichtung mit dem mindestens einen an der Außenseite angeordneten Bauteil verbindbar ist, sodass eine lösbare, formschlüssige Verbindung zwischen innen- und außenseitigen Bauteilen entsteht, wobei die Haltevorrichtung zwischen den innenseitigen Bauteilen und dem Verbindungsstück angeordnet ist und mindestens eine in Richtung zur Gebäudewand hin ausgebildete erste Halterung umfasst, welche gewinkelt ausgebildet ist, sowie mindestens eine zweite von der Gebäudewand weg weisende zweite Halterung, wobei die erste Halterung ausgestaltet ist, einen Kabelbinder, welcher vom außenseitigen Bauteil durch die Öffnung führt, aufzunehmen, und die zweite Halterung ausgestaltet ist, in eine Hülse aufgenommen zu werden, sodass eine rasterbare Steckverbindung der Blende zur Düse resultiert.

Mittels einer solchen Haltevorrichtung ist es auf einfache Weise möglich, nicht nur die innenseitige Düse kraftschlüssig an der Innenseite der Gebäudewand zu fixieren, sondern auch, mindestens zwei Stellungen der Blende zu realisieren, beispielsweise eine geschlossene und eine geöffnete Stellung.

Bevorzugt ist die Lüftungsvorrichtung hierfür in der Form ausgestaltet, dass die innenseitige Düse ein Mittel umfasst, mittels dessen die Blende in der Düse in mindestens zwei Stufen verbindbar ist, sodass mindestens eine erste offene Stellung, in welcher Luft durch das Verbindungsstück und die Düse in den Innenraum leitbar ist, und eine zweite, geschlossene Stellung, in welcher der Lufteintritt in den Innenraum unterbunden ist, einstellbar sind.

Oftmals sind moderne Häuser nun so weit abgedichtet, dass kein hinreichender Druckausgleich bei Betrieb einer Lüftungseinrichtung mehr erzielt werden kann. Damit würde sich ein Druckgefälle entgegen der Förderrichtung der Lüftungseinrichtung aufbauen. Um dem zu begegnen, sieht die Erfindung ein Lüftungssystem mit zumindest zwei erfindungsgemäßen Lüftungsvorrichtungen und einer Steuerung vor. Mittels der Steuerung werden die Lüftungsvorrichtungen abwechselnd mit umgekehrten Förderrichtungen betrieben. Fördert die eine Lüftungsvorrichtung also Außenluft in das Gebäude, wird von der anderen Lüftungsvorrichtung gleichzeitig Raumluft nach außen gefördert. Die Steuerung kann dabei auch in den Lüftungsvorrichtungen selbst enthalten sein. Ein besonderer Vorteil der erfindungsgemäßen Lüftungsvorrichtungen liegt auch darin, dass diese zum Aufbau eines Lüftungssystems räumlich getrennt voneinander, beispielsweise sogar in verschiedenen Räumen angeordnet werden können. Dies ist vorteilhaft einerseits, um einen sehr effektiven Luftaustausch zu erzielen, da der Luftstrom zwischen den Lüftungsvorrichtungen einen entsprechend weiten Weg zurücklegt. Gleichzeitig werden auch raumlufttechnische Kurzschlüsse vermieden, bei denen ein Teil der zugeführten Frischluft durch einen nahen Abluftkanal sofort wieder nach draußen abgeführt wird.

Die Lüftungsvorrichtungen können auch jeweils Drahtlos-Kommunikationseinrichtungen aufweisen. Das Lüftungssystem kann dann eingerichtet sein, über eine Drahtlos-Kommunikation mittels der Drahtlos-Kommunikationseinrichtungen die Lüftungsvorrichtungen gleichzeitig mit entgegengesetzten Förderrichtungen und zyklischer Umschaltung der Förderrichtungen zu betreiben.

Weiterhin kann auch ein elektrischer Energiespeicher zum Antrieb des Lüftermotors vorgesehen werden. Der Energiespeicher kann beispielsweise im Wulst eines Kragens der innen- oder außenseitigen Düse eingebaut sein. Außenseitig können ein oder mehrere Solarzellen vorhanden sein, um den Energiespeicher aufzuladen. Damit kann die Lüftungsvorrichtung unabhängig vom Stromnetz betrieben werden. Wenn dann auch noch die Kommunikation drahtlos erfolgt, sind die Lüftungsvorrichtungen vollständig autark.

Es reicht dann im Wesentlichen, die Öffnungen in den Wänden vorzusehen und die Lüftungsvorrichtungen einzusetzen.

Die Erfindung wird nachfolgend genauer anhand der beigeschlossenen Figuren erläutert. In den Figuren verweisen gleiche Bezugszeichen auf gleiche oder entsprechende Elemente. Es zeigen:
- Fig. 1: eine Schnittdarstellung durch eine erfindungsgemäße, in eine Wand eingesetzte Lüftungsvorrichtung,
- Fig. 2: eine Ausführungsform einer innenseitigen Blende,
- Fig. 3: eine Ausführungsform eines Regenerators,
- Fig. 4: eine Einheit mit Regenerator,
- Fig. 5: eine Schnittdarstellung einer weiteren Lüftungsvorrichtung gemäß einer Ausführungsform,
- Fig. 6: ein nochmals weitere Schnittdarstellung einer weiteren Lüftungsvorrichtung gemäß einer Ausführungsform,
- Fig. 7: Wohnräume mit einem Lüftungssystem.

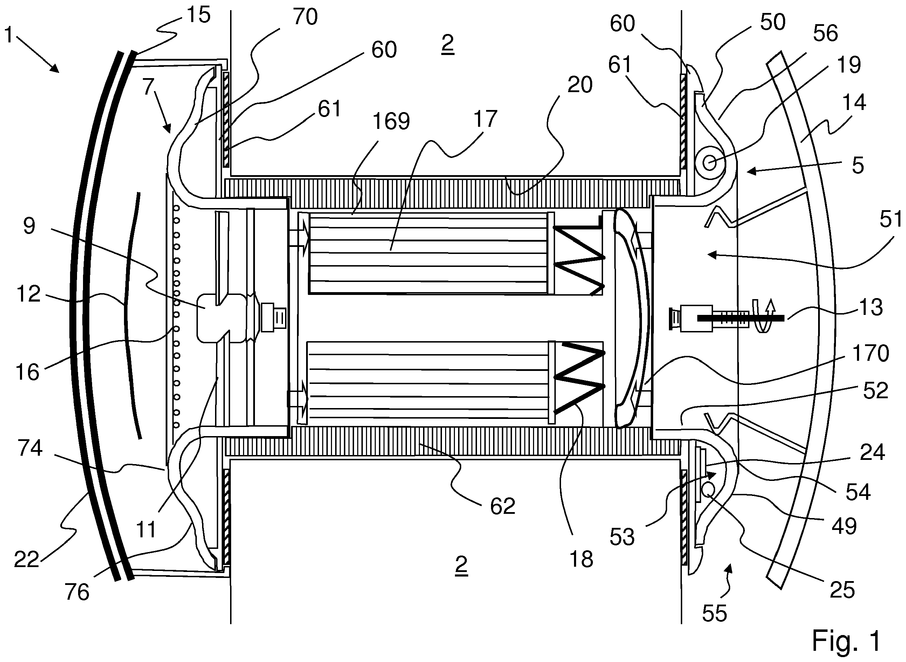

In Fig. 1 ist eine Ausführungsform einer erfindungsgemäßen Lüftungsvorrichtung 1 in einer Schnittdarstellung dargestellt. Die Lüftungsvorrichtung 1 wird in einer Öffnung 20 in einer Wand 2 montiert. Aufgrund des rohr- oder tunnelförmigen luftführenden Kanals durch die Wand kann die Lüftungsvorrichtung 1 auch als Rohrlüfter bezeichnet werden. Besonders geeignet ist die Lüftungsvorrichtung 1 für den Luftaustausch mit dem Außenbereich. Die Wand 2 ist daher vorzugsweise eine Außenwand eines Gebäudes.

Die erfindungsgemäße raumlufttechnische Lüftungsvorrichtung 1 umfasst mindestens eine innenseitige Düse 5, sowie einen Ventilator 11 mit einem Lüftermotor 9. Der Ventilator 11 zum Fördern der Luft durch die Öffnung 20 ist besonders bevorzugt als Axiallüfter ausgebildet.

Die Lüftungsvorrichtung 1 umfasst weiterhin einen Regenerator 17 in Form eines Wärmezwischenspeichers zur Wärmerückgewinnung. Der Regenerator 17 ist bevorzugt innerhalb der Wand 2 angeordnet, um eine platzsparende Bauweise zu erhalten.

Die innenseitige Düse 5 weist einen außen umlaufenden Kragen 50 zur Anlage an die Gebäudewand 2 auf. Der Kragen 50 deckt dabei den Rand der Öffnung 20 ab. Dies ist von Vorteil, da auf diese Weise Unsauberkeiten, die beim Bohren der Öffnung 20 schnell an deren Rand entstehen können, abgedeckt werden und nicht mehr sichtbar sind.

Die Strömungsoberfläche 49 der innenseitigen Düse 5 wird durch die Oberfläche gebildet, an welcher der vom Ventilator 11 erzeugte Luftstrom vorbeistreicht. Diese erstreckt sich von der Innenseite 52 der Düsenöffnung 51 bis über den Kragen 50 bis zur Wandoberfläche. Diese Strömungsfläche hat die Form eines ringförmigen Wulstes 54. Die Strömungsoberfläche 49 weist an der Innenseite 52 der Öffnung 51 eine axial auswärts gerichtet Neigung auf, die über den Wulst 54 hinweg in eine Neigung übergeht, die eine rückwärts, also zur Wand 2 zu gerichtete Komponente aufweist. Mit anderen Worten weist die Strömungsoberfläche am Kragen einen äußeren Bereich 56 auf, entlang welchem die Oberfläche in Strömungsrichtung zur Wand 2 hin geneigt ist. Um die Bildung von Wirbeln zu vermeiden, weist das Profil der Strömungsoberfläche eine stetig gekrümmte Form auf. Es sind demgemäß keine Kanten vorhanden, an welchen die Strömung abreißen kann. Die gesamte strömungsführende umschließende Oberfläche weist keine signifikanten Querschnittssprünge auf, die im wandnahen Geschwindigkeitsprofil Totwasser-Zonen und Verwirbelungen induzieren würden.

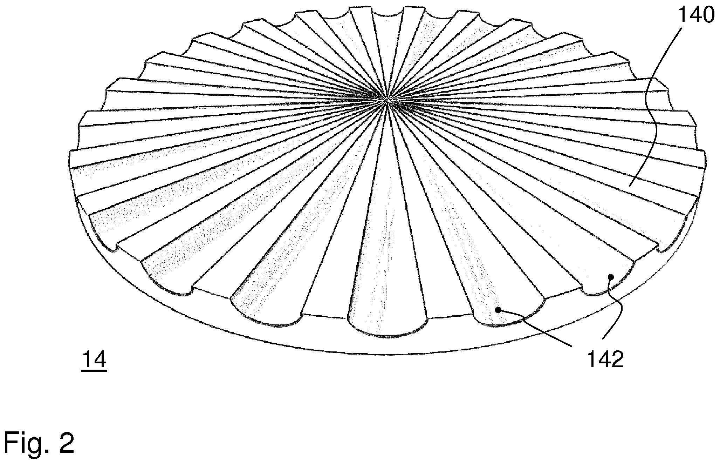

Weiterhin ist eine Blende 14 vorgesehen, welche in einem Abstand zur Strömungsoberfläche 49 der innenseitigen Düse 5 angeordnet ist und die Düsenöffnung 51 abdeckt. Zwischen der Blende 14 und der innenseitigen Düse 5, insbesondere deren Kragen 50 entsteht damit ein ringförmiger Spalt 55. Dieser Spalt 55 dient als Luftaustritt oder Lufteintritt, je nach Strömungsrichtung. Die Blende 14 kann gemäß einer bevorzugten Weiterbildung an der Seite, welche der Düse 5 zugewandt ist, schalldämpfend ausgebildet sein. Die Schalldämpfung kann durch eine besondere Profilierung der Oberfläche, alternativ oder zusätzlich auch durch ein innenseitiges schalldämpfendes Material erzielt werden. Eine bevorzugte Profilierung mit radial auswärts verlaufenden Kanälen wird noch genauer mit Bezug zu Fig. 2 beschrieben.

Die Düsenform mit Wulst, Blende und ringförmigem Spalt erweist sich als besonders vorteilhaft, um eine hohe Effizienz und niedrige Geräuschentwicklung zu schaffen. Die Blende reflektiert aus der Düsenöffnung 51 austretenden Schall zurück. Die zur Wand hin geneigten Strömungsoberfläche führt außerdem zu einer starken Erweiterung des Strömungsquerschnitts. Der Strömungsquerschnitt wird bereits durch die Umlenkung des Luftstroms in radiale Richtung entsprechend dem radial anwachsenden Kreisumfang größer. Zusätzlich erweitert sich durch die Form der Strömungsoberfläche im Bereich 56 der Abstand zwischen Blende und Kragen. Auch dies bremst den Luftstrom. Beides zusammengenommen führt zu einer sehr effektiven Unterdrückung von Turbulenzen.

Für eine hohe Effizienz und geringe Schallemission ist es außerdem günstig, auch die Außenseite der Lüftungsvorrichtung 1 wie die Innenseite mit einer Kombination aus Düse und Blende auszubilden. Gemäß einer Weiterbildung der Erfindung ist daher eine außenseitige Düse 7 vorgesehen, welche wie die innenseitige Düse 5 einen außen umlaufenden Kragen 70 zur Anlage an die Gebäudewand 2 aufweist, so dass der Rand der Öffnung 20 durch den Kragen 70 der außenseitigen Düse 7 abgedeckt wird. Insbesondere kann auch die außenseitige Düse 7 einen Wulst 74 und einen zur Wand 2 hin geneigten Abschnitt 76 der Strömungsoberfläche 69 der Düse 7 aufweisen.

Unabhängig von der speziellen Form der Düsen 5, 7 ist es besonders vorteilhaft, wenn die innenseitige Düse 5 und die außenseitige Düse 7 getrennte und miteinander verbindbare Elemente der Lüftungsvorrichtung 1 sind. Insbesondere kann eine Verbindungseinrichtung 13 vorgesehen sein, mit welcher die innenseitige und die außenseitige Düse 5, 7 miteinander verbunden und in axialer Richtung der Öffnung 20 gegeneinander verspannbar sind. Durch das Verspannen werden die Kragen 50, 70 der Düsen aufeinander bewegt, so dass diese sich an die Ränder der Öffnung 20 anpressen. Anders gesagt werden durch die Verbindungseinrichtung 13 die Kragen 50, 70 beidseitig gegen die Wand geklemmt. Geeignet ist beispielsweise, wie in Fig. 1 dargestellt, ein Schraubmechanismus. Eine Gewindestange an einem Kragen wird durch eine Öffnung im anderen Kragen durchgesteckt.

Durch Aufschrauben einer Mutter werden dann beide Düsen 5, 7 aufeinander zu bewegt, so dass sich die Kragen an die Wand pressen und die Anordnung in der Öffnung 20 verankern.

Anders als in Fig. 1 gezeigt, können auch am Umfang, beziehungsweise an der Innenwand der Öffnung 20 verlaufende Gewindespann-Einrichtungen verwendet werden. Dies bietet den Vorteil, dass der Regenerator 17 zugänglich bleibt und herausgenommen werden kann, ohne die Verspannung zu lösen. Gemäß einer bevorzugten Ausführungsform werden Bänder verwendet, die mit einem Schneckengewinde-Spannmechanismus ähnlich dem einer Schlauchschelle spannbar sind. Die Bänder sind sehr flach und engen den Strömungsquerschnitt nicht oder nicht wesentlich ein.

Diese Art der Befestigung erfordert keine weiteren Arbeiten und baulichen Maßnahmen, um die Lüftungseinrichtung 1 in der Wand zu fixieren. Auch gestattet dies einen größtmöglichen Strömungsquerschnitt in der Wand, da zwischen den endseitigen Düsen kein Schachtgehäuse notwendig und vorgesehen ist.

Allgemein, ohne Beschränkung auf das dargestellte Beispiel sind die Düsen 5, 7 vorzugsweise als Kunststoff-Formteile ausgebildet. Die Düsen 5, 7 können dabei auch mehrteilig sein. Dies bietet sich an, wenn die Düsen 5, 7 gleichzeitig auch als Gehäuse für Komponenten der Lüftungseinrichtung dienen.

Zur Vermeidung der Übertragung von Körperschall können die Wandanlageflächen 60 eines oder beider Kragen 50, 70 mit einem vibrationsdämpfenden Material 61 versehen sein. Als vibrationsdämpfendes Material sind Elastomere und/oder Schaumstoffe besonders geeignet.

Besonders bevorzugt ist auch die Öffnung 20 zwischen den beiden Düsen 5, 7 mit einem Dämm-Material 62 ausgekleidet. Besonders bevorzugt ist wiederum ein Schaumstoff. Das Dämm-Material 62 dient sowohl zur Vermeidung der Übertragung von Vibrationen, als auch zur Dämpfung von Schall. Wie dargestellt, ist es zur Dämpfung der Übertragung von Körperschall besonders günstig, wenn das Dämm-Material 62 jeweils zwischen den Düsen 5, 7 und der Innenseite der Öffnung 20 angeordnet ist. Auf diese Weise wird verhindert, dass Vibrationen von den Düsen auf die Wand übertragen werden.

Um einerseits einen möglichst großen Strömungsquerschnitt innerhalb der Öffnung 20 in der Wand zu erhalten und auch zweitens die Übertragung von Körperschall zu minimieren, bilden der Ventilator 11 mit Lüftermotor 9 gemäß einer besonders bevorzugten Ausführungsform der Erfindung eine Einheit mit einer der Düsen 5, 7. Bei dem in Fig. 1 gezeigten Ausführungsbeispiel ist der Ventilator 11 in der wandaussenseitigen Düse 7 integriert. Diese Konfiguration wird bevorzugt, da auf diese Weise der Regenerator 17 schalldämmend zwischen Ventilator 11 und Innenraum angeordnet ist. Auch kann die außenseitige Düse 7 vom Ventilator übertragene Vibrationen nicht direkt als Schallemission in den Innenraum abstrahlen.

Gemäß einer Ausführungsform der Erfindung können in die außenseitige Blende 15 ein oder mehrere Solarzellen 22 integriert werden. Diese liefern elektrische Energie zum Betrieb der Lüftungsvorrichtung 1. Dazu sind gemäß einer Weiterbildung der Erfindung in einem der Kragen, vorzugsweise im Kragen 50 der innenseitigen Düse 7 ein oder mehrere Energiespeicher 19 vorgesehen, welche von den Solarzellen 22 aufgeladen werden. Die innenseitige Düse als Aufnahme für den oder die Energiespeicher bietet sich aufgrund der konstanten höheren und damit für das Speichervermögen und Langlebigkeit günstigen Temperatur im Gebäudeinneren an.

Generell ist es besonders bevorzugt, wenn elektrische oder elektronische Komponenten 24 zum Betrieb und zur Steuerng der Lüftungsvorrichtung in einer oder beiden Kragen 50, 70 der Düsen 5, 7 angeordnet sind. Dies ist eine besonders wirkungsvolle Maßnahme, um den verfügbaren Strömungsquerschnitt in der Öffnung 20 möglichst groß auslegen zu können. Allgemein ist es dabei auch günstig, wenn die Düse 5, 7, welche die elektronischen Komponenten enthält, als Gehäuseteil ausgebildet ist. Wie in Fig. 1 gezeigt, kann dazu die Düse 5, 7 zweiteilig ausgebildet sein. Insbesondere kann der Wulst des Kragens 50, 70 ein Gehäuse mit einem Hohlraum 53 bilden. Ohne Beschränkung auf die spezielle Form der Düsen im dargestellten Ausführungsbeispiel kann also der Wulst 54, 74 eines Kragens 50, 70 der innen- und/oder außenseitigen Düse 5, 7 einen ringförmigen Hohlraum 53 bilden, in welchem elektrische oder elektronische Komponenten 24 aufgenommen sind.

Diese Ausführungsform der Erfindung kann unabhängig von der speziellen Formgebung der Düsen mit den Wulsten realisiert werden. Allgemein, ohne Beschränkung auf das spezielle abgebildete Ausführungsbeispiel sieht die Erfindung daher auch eine raumlufttechnische Lüftungsvorrichtung 1 zur Lüftung von Räumen in Gebäuden vor, welche zum Einbau in eine Öffnung 20 in einer Gebäudewand 2 ausgebildet ist, wobei die Lüftungsvorrichtung 1 eine erste, vorzugsweise innenseitige Düse 5, eine zweite, vorzugsweise außenseitige Düse 7, einen Ventilator 11 mit Lüftermotor 9 zum Antrieb des Ventilators 11, sowie einen vom Luftstrom des Ventilators erzeugten Luftstroms durchströmten Regenerator 17 in Form eines Wärmezwischenspeichers zur Wärmerückgewinnung umfasst, wobei die erste und zweite Düse 5, 7 jeweils einen äußeren Kragen 50, 70 zur Anlage an die Gebäudewand 2 aufweisen, wobei die Lüftungsvorrichtung elektronische Komponenten 24 zum Betrieb und zur Steuerung aufweist, welche im Kragen 50, 70 einer der Düsen 5,7 angeordnet sind. In Aufsicht auf die Öffnung 20 in der Wand betrachtet sind damit die elektronischen Komponenten 24 neben der Öffnung 20 angeordnet.

Die elektronischen Komponenten können eine Steuereinrichtung, Kommunikationseinrichtungen und Sensoren umfassen. Beispielsweise kann die Fördermenge und/oder Zykluszeit zwischen zwei Umschaltungen der Luftförderrichtung anhand des Feuchtegehalts, der Temperatur und/oder der Tageszeit gesteuert werden.

Zusätzlich zum Regenerator 17 können gemäß einer vorteilhaften Ausführungsform auch Luftfilter vorgesehen werden, um die einströmende Luft zu filtern. Bevorzugt wird eine Filterung sowohl mit einem Grob-, als auch mit einem Feinfilter. Der Feinfilter kann als Gewebe- oder Feststofffilter ausgebildet sein. Dabei wird als Gewebefilter auch ein Filter mit einem Vlies verstanden. Der Filter ist besonders bevorzugt als Taschenfilter ausgebildet. Bei der dargestellten Ausführungsform ist der Feinfilter 18 weiterhin in Richtung von der außenseitigen Düse 7 zur innenseitigen Düse 5 betrachtet der Luftfilter 18 hinter dem Regenerator angeordnet. Der Feinfilter 18 ist dem Regenerator 17 also bei in das Gebäude einströmender Luft nachgeordnet. Diese Konfiguration ist von Vorteil, um die Standzeit des Filters zu erhöhen. Dies wird erreicht, da der Regenerator 17 selbst bereits eine gewisse Filterwirkung hat.

Gemäß einer Ausfürhungsform der Erfindung weist die Lüftungsvorrichtung 1 einen vorzugsweise an der außenseitigen Düse 7 angebrachten Grobfilter 16 in Gestalt eines Gitters auf. Mit diesem Grobfilter wird verhindert, dass größere Partikel, Insekten oder Gegenstände in die Lüftungsvorrichtung eindringen. Der Grobfilter kann gleichzeitig auch als Elektrode eines elektrostatischen Staubfilters verwendet werden. Ebenso kann auch der Regenerator besonders vorteilhaft eine Elektrode eines solchen Staubfilters sein. Eine Kombination dieser beiden Ausführungsformen, also ein elektrostatischer Partikelfilter, bei welchem ein gitterförmiger Grobfilter 16 eine erste Elektrode und der Regenerator 17, oder zumindest ein Teil des Regenerators 17 eine zweite Elektrode bilden, ist besonders vorteilhaft, da diese Anordnung sehr platzsparend ist und auch die große Fläche des Regenerators 17 den elektrostatisch angesaugten Staub gut aufnehmen kann. Ein besonderer Vorteil ist auch der geringe Druckverlust, der mit einem elektrostatischen Filter erzielt werden kann. Ein niedriger Druckverlust senkt die erforderliche Leistung des Ventilators und steigert die Effienz der Vorrichtung, während gleichzeitig die Schallemission reduziert wird.
Fig. 2 zeigt in perspektivischer Ansicht eine Ausführungsform einer innenseitigen Blende 14. Die Blende 14 hat hier als Beispiel eine ebene Grundform. Möglich sind aber auch etwa in einer oder zwei Richtungen gewölbte Blenden. Die der Düsenöffnung zugewandte Seite 140 der Blende 14 ist profiliert, also nicht glatt. Durch die Profilierung wird aus der Düsenöffnung austretender Schall in unterschiedliche Richtungen reflektiert und läuft sich ähnlich wie bei einem Kulissenschalldämpfer tot. Besonders bevorzugt ist wie dargestellt eine Oberfläche mit radial auswärts verlaufenden, offenen Kanälen 142. Die Kanäle 142 folgen damit der Richtung des Luftstroms, so dass der Strömungswiderstand niedrig bleibt. Die Kanäle weisen im dargestellten Beispiel ein halbkreisförmiges, in eine ebene Innenseite eingesenktes Profil auf. Möglich und strömungsmechanisch besonders günstig ist auch ein wellenförmiges Profil, bei welchem also konkav gekrümmte Abschnitte des Profils der Kanäle mit konvex gekrümmten Abschnitten verbunden sind.

Wünschenswert sowohl für die Effizienz, als auch zur Vermeidung von Geräuschen wäre ein möglichst großes Wärmespeichervermögen des Regenerators. Je größer das Wärmespeichervermögen, desto geringer sind die Verluste bei der Wärmerückgewinnung und desto seltener muss die Strömungsrichtung gewechselt werden. Ohne Beschränkung auf die speziellen Merkmale der hier beschriebenen Ausführungsbeispiele ist zu diesem Zweck gemäß einer Ausführungsform der Erfindung vorgesehen, dass der Regenerator optional wenigstens ein Latentwärmespeicher-Material enthält, welches Wärme durch einen Phasenübergang im Temperaturbereich zwischen der Außen- und Innentemperatur des zu belüftenden Gebäudes speichert. Typischerweise liegt dazu die Temperatur des Phasenübergangs zwischen 0 °C und 22 °C.

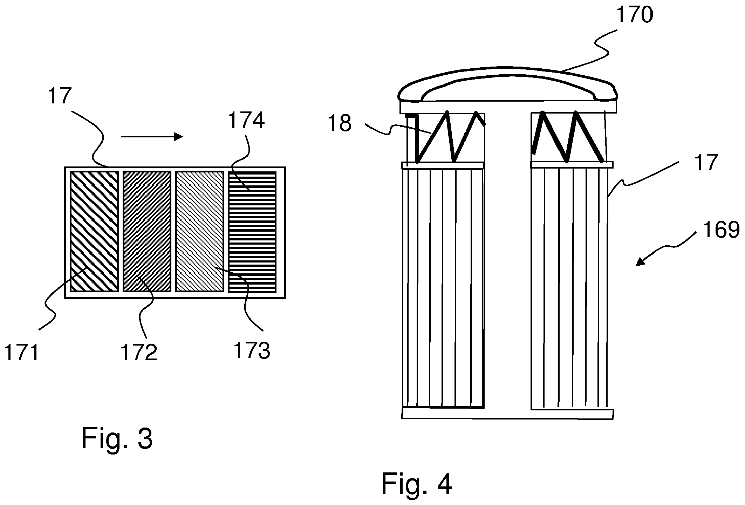

Die Effizienz der Wärmerückgewinnung kann noch weiter verbessert werden, indem zwei oder mehr verschiedene Latentwärmespeichermaterialien im Regenerator 17 kombiniert werden. Fig. 3 zeigt hierzu ein Beispiel. Die Latentwärmespeichermaterialien 171, 172, 173 sind in Luftförderrichtung gesehen hintereinander angeordnet, so dass die vom Ventilator geförderte Luft die Latentwärmespeichermaterialien 171, 172, 173 nacheinander durchströmt. Die Latentwärmespeichermaterialien 171, 172, 173 unterscheiden sich dabei hinsichtlich der jeweiligen Temperatur des Phasenübergangs. Insbesondere kann es auch sinnvoll sein, die Abfolge der zwei oder mehr Latentspeichermaterialien 171, 172, 173 so zu wählen, dass die Phasenübergangstemperaturen sukzessive in Richtung von innen nach außen, beziehungsweise in Richtung von der innenseitigen Düse 5 zur außenseitigen Düse 7 abnehmen. Geht man von einem typischen Einsatz der Lüftungsvorrichtung 1 in gemäßigten Breiten aus, so ist die mittlere Außentemperatur geringer als die mittlere Wohnraumtemperatur. Die Phasenübergangstemperaturen folgen bei einer solchen Abfolge mithin dem mittleren Temperaturgradienten.

Gemäß einer anderen Ausführungsform der Erfindung kann auch ein metallisches Wärmespeichermaterial 174 als Bestandteil des Regenerators vorgesehen werden. Beispielsweise kann das metallische Wärmespeichermaterial 174 als Körper mit offenen, luftleitende Kanälen, als Anordnung von Stäben oder als Metallwolle in loser, geflochtener, gewebter oder gewirkter Form vorliegen. Das metallische Wärmespeichermaterial 174 kann, wie schematisch in Fig. 3 dargestellt, auch mit Latentwärmespeicher-Materialien kombiniert werden.

Neben einer hohen Effizienz und möglichst geringen Schallemissionen ist auch eine einfache Wartung wünschenswert. Der größte Wartungsaufwand entsteht dabei durch die Reinigung. Durch den ständigen Luftstrom kommt es in der Ventilationseinrichtung 1 insbesondere dort schnell zu Schmutzablagerungen, wo der Strömungsquerschnittt eng ist. Dies ist besonders im Regenerator 17 der Fall. Um das Reinigen möglichst einfach zu machen, ist eine aus der Lüftungsvorrichtung herausnehmbare Einheit 169 mit dem Regenerator 17 vorgesehen, wobei die Einheit mit Regenerator 17 spülmaschinenfest und in einer Haushalts-Spülmaschine reinigbar ist. Dies stellt unter anderem Anforderungen an die Abmessungen der Einheit. Vorzugsweise ist die Einheit 169 kürzer als 30 cm. Die Einheit 169 mit Regenerator 17, wie sie in der in Fig. 1 gezeigten Lüftungsvorrichtung 1 eingesetzt ist, ist in Fig. 4 nochmals gesondert gezeichnet. Um die Einheit 169 leicht herausnehmen zu können, kann ein Griff 170 vorgesehen sein. Die Einheit 169 enthält vorzugsweise auch den Luftfilter 18. Wird die Einheit zum Reinigen herausgenommen, kann bei dieser Gelegenheit auch der Luftfilter 18 leicht und schnell ausgetauscht werden. Alternativ kann auch der Luftfilter 18 spülmaschinenfest sein und in der Spülmaschine mit gereinigt werden.

Die Düsen sind bevorzugt rotationssymmetrisch ausgeführt. Mit einer rotationssymmetrischen Düse kann ein wie in Fig. 1 gezeigter Verschlussdeckel 12 durch axiale Verstellung, die Lüftungsvorrichtung komplett verschließen. Auch kann bei anliegendem Winddruck oder Sog durch Verminderung des Öffnungsquerschnitts der Luftstrom mit dem Verschlussdeckel 12, geregelt werden. Der Verschlussdeckel 12 kann vorteilhaft in seiner Form an die außenseitige Blende 15 angepasst sein, so dass sich der Verschlussdeckel 12 in geöffnetem Zustand an die außenseitige Blende 15 anlegt. Damit wird der Luftstrom in vollständig geöffneter Position des Verschlussdeckels nicht oder zumindest nicht wesentlich behindert.

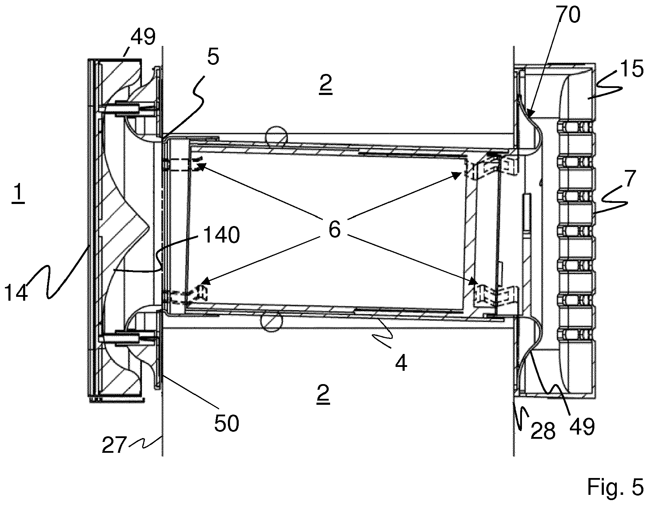

Fig. 5 zeigt eine weitere Schnittdarstellung durch Lüftungsvorrichtung 1 gemäß einer Ausführungsform. Die innenseitige Blende 14 weist auf der dem Innenraum ab- und der Innenseite 27 der Gebäudewand 2 zugewandten Seite eine Strömungsoberfläche 140 auf. Ebenfalls sichtbar ist die Strömungsoberfläche 49 der innenseitigen Düse 5. Die innenseitige Blende 14 umfasst Hülsen 82, mit welchen die zweiten Halterungen 80 der Haltevorrichtung 8 (vorliegend nicht bezeichnet) verbindbar sind. Es resultiert eine rasterbare Steckverbindung. Die Strömungsoberfläche 140 der innenseitigen Blende 14 ist als spitz zulaufende Form ausgebildet, wobei die Spitze über der geometrischen Mitte der Blendenfläche angeordnet ist.

Allgemein, ohne Beschränkung auf das hier dargestellte Beispiel, kann die Strömungsoberfläche 140 allerdings auch profiliert ausgebildet, insbesondere als profilierte Oberfläche mit radial auswärts verlaufenden, offenen Kanälen, vorliegen. Sofern die Strömungsoberfläche 140 eine spitz zulaufende Form aufweist, kann diese beispielhaft die Form einer Pyramide oder eines Kegels ausgebildet sein, bevorzugt in Form eines Kegels oder einer Pyramide mit einer gekrümmt ausgebildeten Leitkurve, besonders bevorzugt in Form einer Leitkurve, deren Steigung stetig variiert und insbesondere hin zur Spitze einen absolut höheren Wert aufweist als an der Blendenfläche.

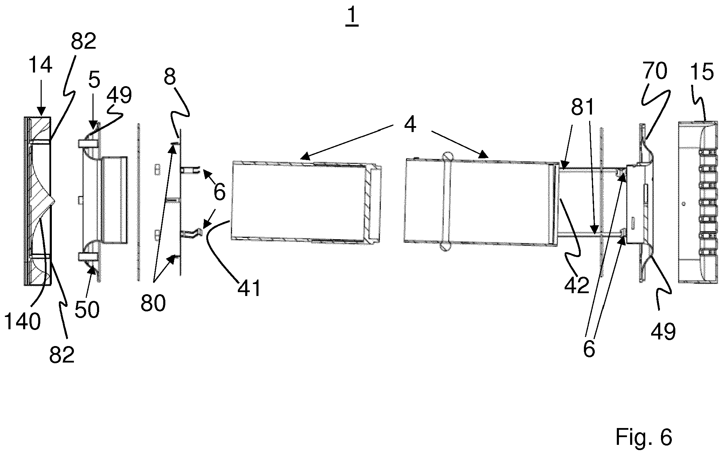

Fig. 6 zeigt eine weitere Schnittdarstellung der einzelnen Komponenten einer Lüftungsvorrichtung 1 gemäß einer Ausführungsform der Erfindung. Dargestellt ist die Blende 14, die innenseitige Düse 5, die Haltevorrichtung 8, welche Halterungen 80 an der im eingebauten Zustand von der Innenseite der Gebäudewand abgewandten Seite aufweist sowie Halterungen 6, welche auf der im eingebauten Zustand der Innenseite der Gebäudewand zugewandten Seite der Haltevorrichtung 8 angeordnet sind. Diese sind dazu ausgebildet, als Kalbelbinder ausgebildete Verbinder 81 aufzunehmen. Weiterhin umfasst die Lüftungsvorrichtung das Verbindungsstück 4, welches vorliegend mehrteilig ausgebildet ist, sowie eine außenseitige Düse 7, an welcher ebenfalls Halterungen 6 angeordnet sind, sowie die außenseitige Blende 15. Das Verbindungsstück umfasst eine innenseitige Öffnung 41 und eine außenseitige Öffnung 42.

Weiterhin ist in Fig. 6 insbesondere die hier spitz zulaufende Form der Strömungsoberfläche 140 der innenseitigen Blende 15 erkennbar, sowie die Strömungsoberfläche 33 der innenseitigen Düse 5. Die innenseitige Blende 15 umfasst Hülsen 82, mit welchen die zweiten Halterungen 80 der Haltevorrichtung 8 verbindbar sind. Zumindest der Kragen 50 ist dabei bevorzugt als ringförmiger Wulst ausgebildet. Auch kann der Kragen 70 der außenseitigen Düse 7 ebenfalls als ringförmiger Wulst ausgebildet sein.

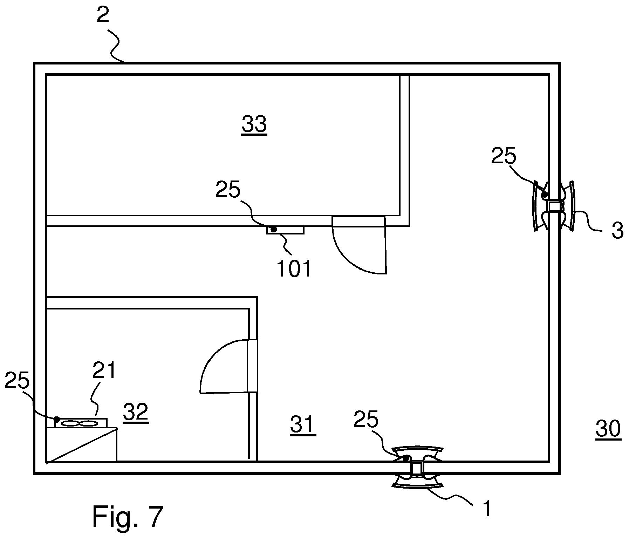

Anhand von Fig. 7 wird nachfolgend ein Lüftungssystem 100 beschrieben, welches auf der Grundlage mehrerer erfindungsgemäßer Lüftungsvorrichtungen 1, 3 aufgebaut ist. Fig. 7 zeigt eine Wohnung 30 mit mehreren Räumen 31, 32, 33. In die Wand 2, welche die Außenwand bildet, sind zwei erfindungsgemäße Lüftungsvorrichtungen 1, 3 eingesetzt. Beide verfügen über Drahtlos-Kommunikationseinrichtungen 25. Ebenfalls vorgesehen ist eine Steuerung 101, beispielsweise ausgestattet mit einer graphischen Bedienoberfläche. Die Steuerung ist gemäß einer Ausführungsform separat von den Lüftungsvorrichtungen 1, 3 angeordnet. Ebenso möglich ist aber auch, dass die Steuerung 101 in einer der Lüftungsvorrichtungen 1, 3 integriert ist.

Die Lüftungsvorrichtungen 1, 3 sind räumlich getrennt voneinander, jede in einer eigenen Öffnung in der Wand 2 angeordnet. Wie dargestellt können die Lüftungsvorrichtungen 1, 3 insbesondere auch in verschiedenen Wänden integriert sein.

Mittels der Steuerung 101 werden die Lüftungsvorrichtungen 1, 3 nun abwechselnd mit umgekehrten Förderrichtungen betrieben. Dies bedeutet, dass eine Lüftungsvorrichtung Luft zuführt, während die andere Luft abführt und dann abgewechselt wird, indem beide Lüftungsvorrichtungen 1, 3 die Förderrichtungen umkehren. Die Länge der Zyklen richtet sich vor allem danach, wie lange die Regeneratoren Wärme austauschen können.

Dieser Betrieb der Lüftungsvorrichtungen 1, 3, bei welchem die Lüftungsvorrichtungen 1, 3 mit entgegengesetzten Förderrichtungen laufen und zyklische die Förderrichtung umgeschaltet wird, wird von der Steuerungseinrichtung 101 über einen Datenaustausch mittels der Drahtlos-Kommunikationseinrichtungen 25 gesteuert. Die drahtlose Kommunikation ist besonders geeignet, um eine abgestimmte Steuerung der mindestens zwei räumlich voneinander getrennten Lüftungsvorrichtungen 1, 3 in einfacher Weise ohne größeren Aufwand einer Verkabelung zu erreichen.

Zusätzlich können auch noch weitere Geräte in das Lüftungssystem integriert werden. Gemäß einer Ausführungsform der Erfindung umfasst das Lüftungssystem 100 auch einen Einzelraumlüfter 21, welcher einen einzelnen Raum, hier das Zimmer 32 lüftet. Beispielsweise kann die Lüftung wie dargestellt über einen Schacht erfolgen. Auch der Einzelraumlüfter 21 kommuniziert mittels einer Drahtlos-Kommunikationseinrichtung 25 mit der Steuerung 101. Wird beispielsweise der Einzelraumlüfter 21, etwa nach der Benutzung eines Badezimmers in Betrieb genommen, ändern sich die Druckverhältnisse. So können dann, wenn der Badlüfter Luft aus dem Zimmer abführt, die erfindungsgemäßen Lüftungsvorrichtungen 1, 3 anders als mit umgekehrten Förderrichtungen betrieben werden. Beispielsweise kann diejenige Lüftungsvorrichtungen 1, 3, welche ebenfalls Luft nach außen fördert, für die Dauer des Betriebs des Einzelraumlüfters 21 angehalten werden, damit beide Geräte nicht gegeneinander arbeiten.

Gemäß noch einer Weiterbildung kann das System 101 selbstvernetzend ausgebildet sein. Bei einem solchen System finden sich die zugehörigen Geräte, also bei dem in Fig. 7 gezeigten Beispiel die Steuerung 101, die Einzelraumlüftung 21 und die beiden Lüftungsvorrichtungen 1, 3 durch Absenden und Empfangen von Initialisierungssignalen. Beispielsweise kann die Kommunikation mit einem Master-Slave-Protokoll erfolgen. Dabei muss die Steuerungseinrichtung 101 nicht zwangsläufig auch den Master darstellen.

Es ist dem Fachmann ersichtlich, dass die Erfindung nicht auf die dargestellten speziellen Ausführungsbeispiele beschränkt ist, sondern im Rahmen der verschiedenen Ausführungsformen, wie sie auch in den Ansprüchen definiert sind, variiert werden kann. So kann die Verbindungseinrichtung 13 anders als in Fig. 1 dargestellt, auch am Rand der Öffnung 20 angeordnet sein, um die Entnahme der Einheit 169 mit dem Regenerator 17 zu erleichtern.

### Bezugszeichenliste

- 1, 3: Lüftungsvorrichtung
- 2: Gebäudewand
- 4: Verbindungsstück
- 5: Innenseitige Düse
- 6: Halterung für Verbinder 81
- 7: Außenseitige Düse
- 8: Haltevorrichtung
- 9: Lüftermotor
- 11: Ventilator
- 12: Verschlussdeckel
- 13: Verbindungseinrichtung
- 14, 15: Blende
- 16: Grobfilter
- 17: Regenerator
- 18: Luftfilter
- 19: Energiespeicher
- 20: Öffnung in Gebäudewand 2
- 21: Einzelraumlüfter
- 22: Solarzelle
- 24: elektrische/elektronische Komponenten
- 25: Drahtlos-Kommunikationseinrichtungen
- 30: Wohnung
- 31, 32, 33: Zimmer
- 35: Lüfter
- 41: innenseitige Öffnung des Verbindungsstücks
- 42: außenseitige Öffnung des Verbindungsstücks
- 49: Strömungsoberfläche
- 50, 70: Kragen
- 51, 71: Düsenöffnung
- 52: Innenseite von 51
- 53: Hohlraum
- 54, 74: Wulst
- 55: ringförmiger Spalt
- 56, 76: zur Wand hin geneigter Bereich der Strömungsoberfläche
- 60: Wandanlagefläche von 50, 70
- 61: vibrationsdämpfendes Material
- 62: Dämm-Material
- 80: zweite Halterung
- 81: als Kabelbinder ausgestaltete Verbinder
- 82: mit Halterug 80 verbindbare Hülse
- 100: Lüftungssystem
- 101: Steuerung
- 140: der Düsenöffnung 51 zugewandte Seite der Blende 14
- 142: offene Kanäle
- 169: Einheit mit Regenerator 17
- 170: Griff
- 171, 172, 173: Latentwärmespeichermaterial
- 174: metallisches Wärmespeichermaterial

## Patentansprüche

1. Raumlufttechnische Lüftungsvorrichtung (1, 3) zur Lüftung von Räumen in Gebäuden, zum Einbau in eine Öffnung (20) in einer Gebäudewand (2), insbesondere einer Außenwand, wobei die Lüftungsvorrichtung (1)
- eine innenseitige Düse (5), sowie
- einen Ventilator (11) mit
- Lüftermotor (9) zum Antrieb des Ventilators (11) umfasst, um Luft durch die Öffnung hindurch zu transportieren,
- einen Regenerator (17) in Form eines Wärmezwischenspeichers zur Wärmerückgewinnung, wobei
- eine Blende (14) vorgesehen ist, welche in einem Abstand zur Strömungsoberfläche (49) der innenseitigen Düse (5) angeordnet ist und die Düsenöffnung (51) abdeckt, so dass zwischen der Strömungsoberfläche (49) und der Blende (14) ein vorzugsweise umlaufender ringförmiger Spalt (55) vorhanden ist, durch welchen die vom Ventilator (11) geförderte Luft seitlich ein- oder austreten kann, **dadurch gekennzeichnet, dass**
die innenseitige Düse (5)
- einen außen umlaufenden Kragen (50) zur Anlage an die Gebäudewand (2) aufweist, so dass der Rand der Öffnung (20) durch den Kragen (50) der innenseitige Düse (5) abdeckbar ist, wobei die innenseitige Düse (5)
- eine Strömungsoberfläche (49) aufweist, welche sich von der Innenseite (52) der Düsenöffnung (51) bis über den Kragen (50) erstreckt und die Gestalt eines ringförmigen Wulstes (54) hat, so dass die Strömungsoberfläche (49) von einer in axialer Richtung auswärts gerichteten Neigung an der Innenseite (52) in eine rückwärts gerichtete Neigung am Kragen (50) übergeht.

2. Lüftungsvorrichtung (1, 3) gemäß dem vorstehenden Anspruch, **gekennzeichnet durch** eine außenseitige Düse (7), welche wie die innenseitige Düse (5) einen außen umlaufenden Kragen (70) zur Anlage an die Gebäudewand (2) aufweist, so dass der Rand der Öffnung (20) durch den Kragen (70) der außenseitigen Düse (7) abgedeckt wird, wobei die innenseitige Düse (5) und die außenseitige Düse (7) getrennte und miteinander verbindbare Elemente der Lüftungsvorrichtung (1, 3) sind.

3. Lüftungsvorrichtung (1, 3) gemäß Anspruch 2, **gekennzeichnet durch** eine Verbindungseinrichtung (13), mit welcher die innenseitige und die außenseitige Düse (5, 7) miteinander verbunden und in axialer Richtung der Öffnung (20) gegeneinander verspannbar sind, so dass die Kragen (50, 70) beim Verspannen aufeinander zu bewegt werden und sich an die Ränder der Öffnung (20) anpressen.

4. Lüftungsvorrichtung (1) gemäß einem der vorstehenden Ansprüche, **dadurch gekennzeichnet, dass** sie als Kabelbinder ausgestaltete Verbinder umfasst, welche durch die Öffnung in der Gebäudewand reichen und die innenseitigen Bauteile der Lüftungsvorrichtung (1) mit den außenseitigen Bauteilen der Lüftungsvorrichtung (1) so verbinden, dass diese in der Öffnung der Gebäudewand gegeneinander fixiert sind.

5. Lüftungsvorrichtung (1) gemäß einem der vorstehenden Ansprüche, **dadurch gekennzeichnet, dass** die innenseitige und die außenseitige Öffnung eines Verbindungsstücks (4) in unterschiedlicher Höhe in der Durchtrittsöffnung der Gebäudewand angeordnet sind, sodass das Verbindungsstück ein Gefälle aufweist und kondensierte Flüssigkeit von der höhergelegenen Öffnung zur niedriger gelegenen Öffnung des Verbindungsstücks (4) hin ableitbar ist.

6. Lüftungsvorrichtung (1) gemäß dem vorstehenden Anspruch, wobei die Neigung durch Zentrierfedern erzeugt wird, welche so eingestellt sind, dass auch bei einer waagrecht verlaufenden Öffnung in der Gebäudewand eine automatische Neigung des Verbindungsstücks erzielt wird.

7. Lüftungsvorrichtung (1) gemäß einem der vorstehenden Ansprüche, wobei an der Außenseite ein Speier angeordnet ist, welcher eine Länge zwischen mindestens 2 cm und höchstens 10 cm, bevorzugt 3 cm, gemessen von der Gebäudewand in der Richtung weg von der Gebäudewand aufweist, sodass ein Benetzen der Außenwand durch Kondensat vermindert oder ganz verhindert wird.

8. Lüftungsvorrichtung (1) gemäß einem der vorstehenden Ansprüche, **dadurch gekennzeichnet, dass** elektrische oder elektronische Komponenten (24) zum Betrieb und zur Steuerung der Lüftungsvorrichtung im Kragen (50, 70) der innen- oder außenseitigen Düse (5, 7) angeordnet sind.

9. Lüftungsvorrichtung (1) gemäß dem vorstehenden Anspruch, **dadurch gekennzeichnet, dass** der Wulst (54, 74) des Kragens (50, 70) der innen- oder außenseitigen Düse (5, 7) einen ringförmigen Hohlraum (53) bilden, in welchem elektrische oder elektronische Komponenten (24) aufgenommen sind.

10. Lüftungsvorrichtung (1) gemäß einem der vorstehenden Ansprüche, **gekennzeichnet durch** zumindest eines der Merkmale:
- der Ventilator (11) mit Lüftermotor (9) bildet eine Einheit mit einer der Düsen (5, 7)
- die Wandanlageflächen (60) eines oder beider Kragen (50, 70) sind mit einem vibrationsdämpfenden Material (61) versehen,
- die Öffnung (20) zwischen den beiden Düsen (5, 7) ist mit einem Dämm-Material (62) ausgekleidet.

11. Lüftungsvorrichtung (1, 3) gemäß einem der vorstehenden Ansprüche, **dadurch gekennzeichnet, dass** die Blende (14) auf der Seite (140), welche der Düsenöffnung (51) zugewandt ist, eine profilierte Oberfläche aufweist, insbesondere eine profilierte Oberfläche mit radial auswärts verlaufenden, offenen Kanälen (142) oder als spitz zulaufende Form ausgebildet ist, wobei die Spitze über der geometrischen Mitte der Blendenfläche angeordnet ist, insbesondere in Form eines Kegels oder einer Pyramide, bevorzugt in Form eines Kegels oder einer Pyramide mit einer gekrümmt ausgebildeten Leitkurve, besonders bevorzugt in Form einer hyperbelartig gekrümmten Leitkurve.

12. Lüftungsvorrichtung (1, 3) gemäß einem der vorstehenden Ansprüche, **dadurch gekennzeichnet, dass** mindestens eine Blende mindestens einer Düsenöffnung ein Damm-Material umfasst, bevorzugt EPP (Expandiertes Polypropylen) mit einer Dichte von 60g/l.

13. Lüftungsvorrichtung (1, 3) gemäß dem vorstehenden Anspruch, wobei sowohl die Innenseite als auch die außenseitige Blende ein Dämm-Material umfassen.

14. Lüftungsvorrichtung (1, 3) gemäß einem der vorstehenden Ansprüche, **gekennzeichnet durch** einen elektrischen Energiespeicher (19) zum Antrieb des Lüftermotors (9), vorzugsweise angeordnet im Wulst eines Kragens (50, 70) der innen- oder außenseitigen Düse (5, 7) sowie außenseitig angeordnet ein oder mehrere Solarzellen (22), um den Energiespeicher (19) aufzuladen.

15. Lüftungsvorrichtung (1, 3) gemäß einem der vorstehenden Ansprüche, **gekennzeichnet durch** einen elektrostatischen Partikelfilter, bei welchem ein gitterförmiger Grobfilter (16) eine erste Elektrode und der Regenerator (17) oder zumindest ein Teil des Regenerators (17) eine zweite Elektrode bilden.

16. Lüftungsvorrichtung (1, 3) gemäß einem der vorstehenden Ansprüche, **dadurch gekennzeichnet, dass** der Regenerator (17) wenigstens ein Latentwärmespeicher-Material (171, 172, 173) enthält, welches Wärme durch einen Phasenübergang speichert, wobei die Temperatur des Phasenübergangs zwischen 0 °C und 22°C liegt.

17. Lüftungsvorrichtung (1, 3) gemäß dem vorstehenden Anspruch, **dadurch gekennzeichnet, dass** der Regenerator (17) mehrere Latentwärmespeichermaterialien (171, 172, 173) umfasst, welche jeweils unterschiedliche Temperaturen des Phasenübergangs aufweisen und welche entlang der Luftförderrichtung gesehen hintereinander angeordnet sind, so dass die vom Ventilator (11) geförderte Luft die Latentwärmespeichermaterialien (171, 172, 173) nacheinander durchströmt.

18. Lüftungsvorrichtung (1, 3) gemäß einem der vorstehenden Ansprüche, **gekennzeichnet durch** eine aus der Lüftungsvorrichtung (1, 3) herausnehmbare-Einheit (169) mit dem Regenerator (17), wobei die Einheit (169) mit Regenerator (17) spülmaschinenfest und in einer Haushalts-Spülmaschine reinigbar ist.

19. Lüftungsvorrichtung (1, 3) gemäß einem der Ansprüche 5 bis 18, wobei die Lüftungsvorrichtung mindestens ein außenseitiges Bauteil sowie eine Haltevorrichtung (8) umfasst, mit welcher die innenseitigen Bauteile der Lüftungsvorrichtung (1, 3) mit dem mindestens einen außenseitigen Bauteil der Lüftungsvorrichtung (1, 3) verbindbar sind, sodass eine lösbare, formschlüssige Verbindung zwischen innen- und außenseitigen Bauteilen entsteht, wobei die Haltevorrichtung (8) zwischen den innenseitigen Bauteilen und dem Verbindungsstück (4) angeordnet ist und mindestens eine in Richtung zum außenseitigen Bauteil ausgebildete erste Halterung (6) umfasst, welche gewinkelt ausgebildet ist, sowie mindestens eine zweite zu den innenseitigen Bauteilen weisende zweite Halterung (80), wobei die erste Halterung (6) ausgestaltet ist, einen Kabelbinder, welcher ausgebildet ist, vom außenseitigen Bauteil durch die Öffnung zu führen, aufzunehmen, und die zweite Halterung (80) ausgestaltet ist, in eine Hülse (82) aufgenommen zu werden, sodass eine rasterbare Steckverbindung der Blende (14) zur Düse (5) resultiert.

20. Lüftungsvorrichtung (1, 3) gemäß dem vorstehenden Anspruch, wobei die innenseitige Düse (5) ein Mittel umfasst, mittels dessen die Blende (14) in der Düse (5) in mindestens zwei Stufen verbindbar ist, sodass mindestens eine erste offene Stellung, in welcher Luft durch das Verbindungsstück (4) und die Düse (5) in den Innenraum leitbar ist, und eine zweite, geschlossene Stellung, in welcher der Lufteintritt in den Innenraum unterbunden ist, einstellbar sind.

21. Lüftungssystem (100) mit zumindest zwei Lüftungsvorrichtungen (1, 3) gemäß einem der vorstehenden Ansprüche, wobei die Lüftungsvorrichtungen (1, 3) räumlich getrennt voneinander angeordnet sind, wobei das Lüftungssystem eine Steuerung (101) umfasst, mittels welcher die Lüftungsvorrichtungen (1, 3) abwechselnd mit umgekehrten Förderrichtungen betrieben werden.

22. Lüftungssystem gemäß dem vorstehenden Anspruch,
**dadurch gekennzeichnet, dass** die Lüftungsvorrichtungen (1, 3) Drahtlos-Kommunikationseinrichtungen (25) aufweisen und das Lüftungssystem eingerichtet ist, über eine Drahtlos-Kommunikation mittels der Drahtlos-Kommunikationseinrichtungen (25) die Lüftungsvorrichtungen (1, 3) alternierend mit umgekehrten Förderrichtungen zu betreiben.

## Claims

1. A room air conditioning ventilation device (1,3) for ventilation of rooms in buildings for being installed in an opening (20) in a building wall (2), in particular an outer wall, the ventilation device (1) comprising
- an inside nozzle (5); and
- a fan (11) comprising
- a fan motor (9) for driving the fan (11) to convey air through said opening;
- a regenerator (17) in the form of an intermediate heat storage for heat recovery; wherein
- an screen (14) is provided, which is arranged at a distance from the flow surface (49) of the inside nozzle (5) and covers the nozzle opening (51) so that a preferably circumferential annular gap (55) is provided between the flow surface (49) and the screen (14), through which the air conveyed by the fan (11) can enter or exit laterally;
**characterized in that**
the inside nozzle (5) has
- a peripheral circumferential collar (50) for abutment against the building wall (2), so that the edge of the opening (20) can be covered by the collar (50) of the inside nozzle (5), wherein the inside nozzle (5)
- has a flow surface (49) that extends from the inner surface (52) of the nozzle opening (51) and over the collar (50) and has the shape of an annular bulge (54), so that the flow surface (49) transitions from an axially outwardly directed inclination on the inner surface (52) into a rearward inclination on the collar (50).

2. The ventilation device (1, 3) according to the preceding claim, **characterized by** an outside nozzle (7) which has a peripheral circumferential collar (70), like the inside nozzle (5), for abutment against the building wall (2) so that the edge of the opening (20) is covered by the collar (70) of the outside nozzle (7), wherein the inside nozzle (5) and the outside nozzle (7) are separate and connectable components of the ventilation device (1, 3).

3. The ventilation device (1, 3) according to claim 2, **characterized by** a connecting device (13) adapted to connected with each other and brace against each other in the axial direction of the opening (20) the inside and outside nozzles (5, 7) such that the collars (50, 70) are moved toward each other upon bracing and are urged against the edges of the opening (20).

4. The ventilation device (1) according to any one of the preceding claims, **characterized in that** it comprises connectors in the form of cable ties which extend through the opening in the building wall to connect the inside components of the ventilation device (1) with the outside components of the ventilation device (1) such that they are fixed to each other in the opening of the building wall.

5. The ventilation device (1) according to any one of the preceding claims, **characterized in that** the inside and outside openings of a connecting piece (4) are arranged at different levels within the passage opening of the building wall, so that the connecting piece has an inclination and condensed liquid can be discharged from the higher opening to the lower opening of the connecting piece (4).

6. The ventilation device (1) according to the preceding claim, wherein the inclination is created by centring springs which are adjusted such that automatic inclination of the connecting piece is achieved even in the case of a horizontally extending opening in the building wall.

7. The ventilation device (1) according to any one of the preceding claims, wherein a spout is provided on the outer wall, which has a length between at least 2 cm and at most 10 cm, preferably 3 cm, measured from the building wall in the direction away from the building wall, so that wetting of the outer wall by condensate is reduced or completely prevented.

8. The ventilation device (1) according to any one of the preceding claims, **characterized in that** electrical or electronic components (24) for operation and control of the ventilation device are arranged inside the collar (50, 70) of the inside or outside nozzles (5, 7).

9. The ventilation device (1) according to the preceding claim, **characterized in that** the bulge (54, 74) of the collar (50, 70) of the inside or outside nozzles (5, 7) defines an annular cavity (53) in which electrical or electronic components (24) are accommodated.

10. The ventilation device (1) according to any one of the preceding claims, **characterized by** at least one of the following features:
- the fan (11) including fan motor (9) forms a unit with one of the nozzles (5, 7);
- the wall contact surfaces (60) of one or both collars (50, 70) are provided with a vibration-damping material (61);
- the opening (20) between the two nozzles (5, 7) is lined with an insulating material (62).

11. The ventilation device (1, 3) according to any one of the preceding claims, **characterized in that** the screen (14) has a profiled surface on its side (140) facing the nozzle opening (51), in particular a profiled surface with open channels (142) extending radially outward, or has a shape tapering into a tip, wherein the tip is disposed over the geometric centre of the screen surface, in particular in the form of a cone or a pyramid, preferably in the form of a cone or a pyramid with a curved envelope, particularly preferably in the form of a hyperbolically curved envelope.

12. The ventilation device (1, 3) according to any one of the preceding claims, **characterized in that** at least one screen of at least one nozzle opening comprises an insulating material, preferably EPP (expanded polypropylene) with a density of 60 g/l.

13. The ventilation device (1, 3) according to the preceding claim, wherein both the inside screen and the outside screen comprise an insulating material.

14. The ventilation device (1, 3) according to any one of the preceding claims, **characterized by** an electrical energy storage (19) for driving the fan motor (9), which is preferably arranged inside the bulge of a collar (50, 70) of the inside or outside nozzle (5, 7), and by one or more solar cells (22) arranged on the outside for charging the energy storage (19).

15. The ventilation device (1, 3) according to any one of the preceding claims, **characterized by** an electrostatic particle filter comprising a grid-shaped coarse filter (16) defining a first electrode, and the regenerator (17) or at least a part of the regenerator (17) defining a second electrode.

16. The ventilation device (1, 3) according to any one of the preceding claims, **characterized in that** the regenerator (17) comprises at least one latent heat storage material (171, 172, 173) which stores heat through a phase transition, wherein the temperature of the phase transition is between 0 °C and 22 °C.

17. The ventilation device (1, 3) according to the preceding claim, **characterized in that** the regenerator (17) comprises a plurality of latent heat storage materials (171, 172, 173), each of them having a respective different phase transition temperature and which are arranged successively along the air conveying direction, so that the air conveyed by the fan (11) successively flows through said latent heat storage materials (171, 172, 173).

18. The ventilation device (1, 3) according to any one of the preceding claims, **characterized by** a unit (169) including the regenerator (17), which can be removed from the ventilation device (1, 3), wherein the unit (169) including the regenerator (17) is dishwasher safe and can be cleaned in a household dishwasher.

19. The ventilation device (1, 3) according to any one of claims 5 to 18, wherein the ventilation device comprises at least one outside component and a holding device (8) which is adapted to connect the inside components of the ventilation device (1, 3) with the at least one outside component of the ventilation device (1, 3) such that a releasable positive connection is established between the inside and outside components, wherein the holding device (8) is arranged between the inside components and the connecting piece (4) and comprises at least one first holding means (6) formed so as to extend toward the outside component and being angled, and at least one second holding means (80) facing the inside components, wherein the first holding means (6) is configured to receive a cable tie that is adapted to extend from the outside component through the opening, and wherein the second holding means (80) is adapted to be accommodated in a sleeve (82) so that a snap-fit connection is resulting between the screen (14) and the nozzle (5).

20. The ventilation device (1, 3) according to the preceding claim, wherein the inside nozzle (5) comprises means allowing the screen (14) to be connectable in the nozzle (5) in at least two steps to allow to set at least a first, open position in which air can be conveyed into the interior through the connecting piece (4) and the nozzle (5), and a second, closed position in which air is inhibited from entering into the interior.

21. A ventilation system (100), comprising at least two ventilation devices (1, 3) according to any one of the preceding claims, wherein the ventilation devices (1, 3) are arranged spatially separated from each other, wherein the ventilation system comprises a controller (101) allowing to alternately operate the ventilation devices (1, 3) with reversed flow directions.

22. A ventilation system according to the preceding claim, **characterized in that** the ventilation devices (1, 3) comprise wireless communication devices (25) and the ventilation system is adapted to alternately operate the ventilation devices (1, 3) with reversed flow directions via wireless communication by means of the wireless communication devices (25).

## Revendications

1. Dispositif de ventilation (1, 3) à conditionnement d'air pour la ventilation de pièces dans des bâtiments, destiné à être monté dans une ouverture (20) dans une paroi de bâtiment (2), en particulier une paroi extérieure, le dispositif de ventilation (1) comprenant
- une buse côté intérieur (5), ainsi que
- un ventilateur (11) avec
- un moteur de ventilateur (9) destiné à entraîner le ventilateur (11), afin de transporter l'air à travers l'ouverture,
- un régénérateur (17) se présentant sous forme d'un accumulateur intermédiaire de chaleur destiné à récupérer la chaleur,
dans lequel
- un obturateur (14) est prévu, lequel est disposé à une certaine distance de la surface d'écoulement (49) de la buse côté intérieur (5) et recouvre l'ouverture de buse (51), de sorte qu'une fente (55) annulaire de préférence périphérique, par laquelle l'air transporté par le ventilateur (11) peut entrer ou sortir latéralement, est présente entre la surface d'écoulement (49) et l'obturateur (14),
**caractérisé en ce que**
la buse côté intérieur (5) présente
- une collerette (50) périphérique à l'extérieur destinée à prendre appui sur la paroi de bâtiment (2), de sorte que le bord de l'ouverture (20) peut être recouvert par la collerette (50) de la buse côté intérieur (5), où la buse côté intérieur (5)
- présente une surface d'écoulement (49), laquelle s'étend de la face intérieure (52) de l'ouverture de buse (51) jusqu'à la collerette (50) et a la forme d'un bourrelet (54) annulaire, de sorte que la surface d'écoulement (49) passe d'une inclinaison orientée vers l'extérieur dans la direction axiale sur la face intérieure (52) dans une inclinaison orientée vers l'arrière sur la collerette (50).

2. Dispositif de ventilation (1, 3) selon la revendication précédente, **caractérisé par** une buse côté extérieur (7), laquelle présente, comme la buse côté intérieur (5), une collerette (70) périphérique côté extérieur destinée à prendre appui sur la paroi de bâtiment (2), de sorte que le bord de l'ouverture (20) est recouvert par la collerette (70) de la buse côté extérieur (7), dans lequel la buse côté intérieur (5) et la buse côté extérieur (7) sont des éléments séparés et pouvant être reliés l'un à l'autre du dispositif de ventilation (1, 3).

3. Dispositif de ventilation (1, 3) selon la revendication 2, **caractérisé par** un dispositif de liaison (13), au moyen duquel la buse côté intérieur et la buse côté extérieur (5, 7) sont reliées l'une à l'autre et peuvent être serrées l'une contre l'autre dans la direction axiale de l'ouverture (20), de sorte que les collerettes (50, 70) sont déplacées l'une vers l'autre lors du serrage et se pressent contre les bords de l'ouverture (20).

4. Dispositif de ventilation (1) selon l'une quelconque des revendications précédentes, **caractérisé en ce qu'**il comprend des connecteurs réalisés sous la forme d'attache-câble, lesquels parviennent par l'ouverture dans la paroi de bâtiment et relient les éléments côté intérieur du dispositif de ventilation (1) aux éléments côté extérieur du dispositif de ventilation (1), de sorte que ceux-ci sont fixés les uns contre les autres dans l'ouverture de la paroi de bâtiment.

5. Dispositif de ventilation (1) selon l'une quelconque des revendications précédentes, **caractérisé en ce que** l'ouverture côté intérieur et l'ouverture côté extérieur d'une pièce de liaison (4) sont disposées à différentes hauteurs dans l'ouverture de passage de la paroi de bâtiment, de sorte que la pièce de liaison présente une pente et le liquide condensé peut être évacué de l'ouverture située plus haut en direction de l'ouverture située plus bas de la pièce de liaison (4).

6. Dispositif de ventilation (1) selon la revendication précédente, dans lequel l'inclinaison est produite par des ressorts centraux, lesquels sont réglés de sorte qu'une inclinaison automatique de la pièce de liaison est obtenue y compris lorsqu'une ouverture dans la paroi de bâtiment s'étend horizontalement.

7. Dispositif de ventilation (1) selon l'une quelconque des revendications précédentes, dans lequel un écoulement, lequel présente une longueur comprise entre au moins 2 cm et au plus 10 cm, de préférence de 3 cm, mesurée de la paroi de bâtiment dans la direction s'éloignant de la paroi de bâtiment, est disposé sur la face extérieure, de sorte qu'un mouillage de la paroi extérieure par un condensat est diminué ou totalement empêché.

8. Dispositif de ventilation (1) selon l'une quelconque des revendications précédentes, **caractérisé en ce que** des composants électriques ou électroniques (24) destinés au fonctionnement et à la commande du dispositif de ventilation sont disposés dans la collerette (50, 70) de la buse côté intérieur ou extérieur (5, 7).

9. Dispositif de ventilation (1) selon la revendication précédente, **caractérisé en ce que** le bourrelet (54, 74) de la collerette (50, 70) de la buse côté intérieur ou extérieur (5, 7) forme une cavité annulaire (53), dans laquelle sont logés des composants électriques ou électroniques (24).

10. Dispositif de ventilation (1) selon l'une quelconque des revendications précédentes, **caractérisé par** au moins l'une des caractéristiques :
- le ventilateur (11) avec le moteur de ventilateur (9) forme une unité avec l'une des buses (5, 7)
- les surfaces d'appui de paroi (60) d'une ou des deux collerettes (50, 70) sont pourvues d'un matériau (61) amortissant les vibrations,
- l'ouverture (20) entre les deux buses (5, 7) est revêtue d'un matériau isolant (62).

11. Dispositif de ventilation (1, 3) selon l'une quelconque des revendications précédentes, **caractérisé en ce que** l'obturateur (14) présente sur la face (140), laquelle est tournée vers l'ouverture de buse (51), une surface profilée, en particulier une surface profilée avec des canaux (142) ouverts s'étendant radialement vers l'extérieur ou est réalisé en tant que forme se terminant en pointe, dans lequel la pointe est disposée au-dessus du centre géométrique de la surface d'obturateur, en particulier sous forme d'un cône ou d'une pyramide, de préférence sous forme d'un cône ou d'une pyramide avec une courbe directrice courbée, de manière particulièrement préférée sous forme d'une courbe directrice courbée à la façon d'une hyperbole.

12. Dispositif de ventilation (1, 3) selon l'une quelconque des revendications précédentes, **caractérisé en ce qu'**au moins un obturateur d'au moins une ouverture de buse comprend un matériau isolant, de préférence EPP (polypropylène expansé) avec une densité de 60 g/l.

13. Dispositif de ventilation (1, 3) selon la revendication précédente, dans lequel aussi bien la face intérieure que l'obturateur côté extérieur comprennent un matériau isolant.

14. Dispositif de ventilation (1, 3) selon l'une quelconque des revendications précédentes, **caractérisé par** un accumulateur d'énergie électrique (19) destiné à entraîner le moteur de ventilateur (9), de préférence disposé dans le bourrelet d'une collerette (50, 70) de la buse côté intérieur ou extérieur (5, 7) ainsi qu'une ou plusieurs photopiles (22) disposées côté extérieur, afin de charger l'accumulateur d'énergie (19).

15. Dispositif de ventilation (1, 3) selon l'une quelconque des revendications précédentes, **caractérisé par** un filtre électrostatique à particules, pour lequel un filtre grossier (16) en forme de grille forme une première électrode et le régénérateur (17) ou au moins une partie du régénérateur (17) forme une deuxième électrode.

16. Dispositif de ventilation (1, 3) selon l'une quelconque des revendications précédentes, **caractérisé en ce que** le régénérateur (17) contient au moins un matériau à changement de phase (171, 172, 173), lequel accumule la chaleur due à un changement de phase, où la température du changement de phase est comprise entre 0°C et 22°C.

17. Dispositif de ventilation (1, 3) selon la revendication précédente, **caractérisé en ce que** le régénérateur (17) comprend plusieurs matériaux à changement de phase (171, 172, 173), lesquels présentent respectivement différentes températures du changement de phase et lesquels sont disposés les uns derrière les autres vu le long de la direction de transport d'air, de sorte que l'air transporté par le ventilateur (11) traverse successivement les matériaux à changement de phase (171, 172, 173).

18. Dispositif de ventilation (1, 3) selon l'une quelconque des revendications précédentes, **caractérisé par** une unité (169), pouvant être retirée du dispositif de ventilation (1, 3), avec le régénérateur (17), dans lequel l'unité (169) avec le régénérateur (17) est résistante au lave-vaisselle et peut être nettoyée dans un lave-vaisselle ménager.

19. Dispositif de ventilation (1, 3) selon l'une quelconque des revendications 5 à 18, où le dispositif de ventilation comprend au moins un élément côté extérieur ainsi qu'un dispositif de retenue (8), au moyen duquel les éléments côté intérieur du dispositif de ventilation (1, 3) peuvent être reliés à au moins un élément côté extérieur du dispositif de ventilation (1, 3), de sorte qu'une liaison libérable par coopération de formes est établie entre les éléments côté intérieur et extérieur, dans lequel le dispositif de retenue (8) est disposé entre les éléments côté intérieur et la pièce de liaison (4), et comprend au moins un premier élément de retenue (6) réalisé en direction de l'élément côté extérieur, lequel est coudé, ainsi qu'au moins un deuxième élément de retenue (80) tourné vers les éléments côté intérieur, dans lequel le premier élément de retenue (6) est configuré pour loger un attache-câble, lequel est conçu pour partir de l'élément côté extérieur en passant par l'ouverture, et le deuxième élément de retenue (80) est configuré pour être logé dans un manchon (82), de sorte qu'il en résulte une liaison enfichable encliquetable de l'obturateur (14) par rapport à la buse (5).

20. Dispositif de ventilation (1, 3) selon la revendication précédente, dans lequel la buse côté intérieur (5) comprend un moyen à l'aide duquel l'obturateur (14) peut être relié dans la buse (5) dans au moins deux étages, de sorte qu'au moins une première position ouverte, dans laquelle l'air peut être guidé dans l'espace intérieur à travers la pièce de liaison (4) et la buse (5), et une deuxième position fermée, dans laquelle l'entrée d'air dans l'espace intérieur est empêchée, sont réglables.

21. Système de ventilation (100) pourvu d'au moins deux dispositifs de ventilation (1, 3) selon l'une quelconque des revendications précédentes, dans lequel les dispositifs de ventilation (1, 3) sont disposés de manière à être séparés l'un de l'autre dans l'espace, le système de ventilation comprenant une commande (101), au moyen de laquelle les dispositifs de ventilation (1, 3) fonctionnent alternativement avec des directions de transport inversées.

22. Système de ventilation selon la revendication précédente, **caractérisé en ce que** les dispositifs de ventilation (1, 3) présentent des dispositifs de communication sans fil (25) et le système de ventilation est conçu pour faire fonctionner les dispositifs de ventilation (1, 3) tour à tour avec des directions de transport inversées par l'intermédiaire d'une communication sans fil au moyen des dispositifs de communication sans fil (25).
